# EUROPEAN PATENT APPLICATION

(11) **EP 1 380 938 A1**
(43) Date of publication of application: **14.01.2004**
(21) Application number: 01402898.9
(22) Date of filing: 12.11.2001
(51) Int. Cl.: G06F 9/44

(54) **Method and apparatus for checking the consistency of software applications**

(71) Applicant: ALCATEL, 75008 Paris (FR)
(72) Inventor: De Loye, Martin, 92310 Sevres (FR)
(74) Representative: Lamoureux, Bernard

(57) **Abstract**

System for checking the consistency of software applications executed on several data processing devices (12, 13) coupled to a network (11), where a descriptor file is generated when a software application (14) is executing in the data processing devices (12). This descriptor file is stored in a consistency check client unit (23) which sends the descriptor file to a consistency check server (19). When the data processing device (12) receives a request from the consistency check server (19) which checks the consistency of all the software applications (14, 15, 16, 17, 18) installed in the data processing devices (12, 13), with the help of a reference database (25).

## Description

### OBJECT OF THE INVENTION

The present invention concerns a method and an apparatus for checking the consistency between different software applications that are stored and executed by corresponding data processing devices or servers. The data processing devices communicate with each other by means of a communications network such as an Internet network, or similar.

### STATE OF THE ART

A common communications network interconnects a wide variety of data processing devices or servers with each other. Each one of them is capable of executing at least one software application supplied, likewise, by a wide variety of software application manufacturers.

Each software application can be made by software manufacturers in a separate and independent manner, so that for a first application to be executed in a first data processing device, it has to receive previously some kind of information in form of data, over the communications network, from a second data processing device that has executed a second software application.

Under such circumstances, the software applications have been developed such that they are capable of interacting with each other. Generally, the interactions between software applications are defined by means of the input and output data (I/O data) of each software application. For this reason, it is possible to develop and store each software application in an independent manner.

In the event that a software application is modified (updated), the new version of said software application must continue to maintain the interactions that the earlier version had established with the remaining software applications.

Thus, a form of establishing whether a determined software application is capable of interacting with other software applications loaded in other data processing devices is by executing each one of the software applications independently, that is, by introducing the input data in the first software application it is checked that when the application is run in the data processing device, the output data therefrom correspond to the input data that the second software application must receive.

As a consequence, the new versions of the software applications must preserve consistency with that currently installed. Unfortunately, there is no automatic checking of interoperability of software delivered by various manufacturers. The interoperability must be done manually by checking the documentation and the configuration of the network components.

Thus, there is a requirement to establish a procedure to check the correct interaction of the software applications installed in each data processing device and communicated over the common communications network, whilst the services that the communications network is providing for the users thereof are maintained.

Whilst a software application is updated, the others need not be updated simultaneously, it being possible to carry out the updating in an individual manner and at different times.

### CHARACTERISATION OF THE INVENTION

To overcome the drawbacks outlined above, the present invention provides a method and an apparatus for checking the consistency of the independently updated software applications, which consists in generating a descriptor file corresponding to each software application, this descriptor file being independent of the manufacturer of the software application; storing this descriptor file in the machine where this software application is executed; implementing a consistency check client unit on each machine; implementing a consistency check server in a server linked to said network; sending an interrogation from this server to each client unit in order to get the descriptor file stored in each device; and then checking the consistency of all the software applications, with the help of a reference data base stored in this server.

An aspect of the present invention involves utilising different hardware platforms connected to an Internet network. Other aspect of the invention includes checking automatically if different equipment connected to an IP network can interwork.

Another aspect is that the consistency checker server can easily checked without human intervention if the tested configuration is a known or a new configuration with untested elements. If compatibility problems are encountered, the consistency checker server displays and/or sends to the faulty server information on what to do to fix problem.

### BRIEF DESCRIPTION OF THE DRAWINGS

A fuller explanation of the invention is given in the following description, based on the figures attached, in which:

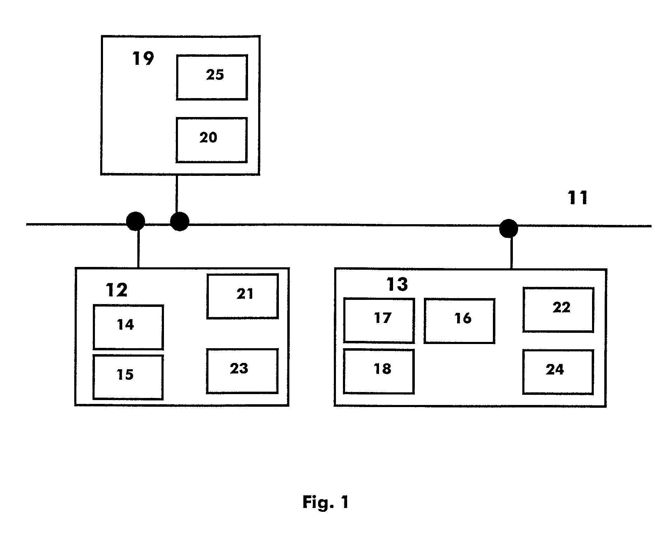

- Figure 1 shows, in a block diagram form, an embodiment of a communications network that communicates a plurality of data processing devices with each other.

### DESCRIPTION OF THE INVENTION

An embodiment of the present invention is described hereunder, in which figure 1 shows a block diagram of a distributed network of data processing devices and/or servers (distributed computer network) 12, 13 connected with each other by means of a communications network such as IP network 11. The data processing devices 12, 13 include their respective consistency checker database 23, 24 and consistency checker client 21, 22.

The distributed computer network comprises a plurality of data processing devices 12, 13 that store and execute one or various software applications 14, 15, 16, 17, 18. A different manufacturer can supply each software application 14. Likewise, a different manufacturer can also manufacture each data processing device 12.

Thus, when a determined software application 14 is updated and/or a new software application is loaded into a determined data processing device 12, it has to be checked that said software application 14 interacts appropriately with the remaining software applications 15 16, 17, 18 that are being executed in the remaining data processing devices 12, 13.

According to the invention, when updating or loading a new software application in any data processing device 12, a file that holds a set of data or attributes corresponding to the software application installed is automatically generated. This means that the release data corresponding to this executable file 14 are stored in a consistency database 23.

The attributes can be, for example, exe software name, release reference, installation date, installation logs, configuration options, applied service packs, tests reports, or the like. The consistency database 23 can also contain software and hardware environment data such as operating system type, release, service pack, memory size, processor speed and so on.

The data related to the software application 12 are written, preferentially, in a language independent of the language employed to write the program lines that form the software application 14, for example, the file generated in loading a software application has the XML (eXtensible Markup Language) format.

The consistency database 23 generated is transmitted over the common transmission medium from the data processing device 12 in which the software application 14 is loaded to a consistency check server 19 that checks the consistency between software applications installed in the data processing devices 12, 13, where they are stored the consistency databases 23, 24, respectively.

From the foregoing, it can be deduced that each data processing device 12 sends the consistency database 23 related with the software application 14 that is executed directly to the consistency check server 19, for it to store it and when necessary run a consistency review program on the installed software applications. Therefore, the consistency checker server 19 interrogates the several data processing devices 12, 13 to retrieve the consistency information 23, 24 stored at the data processing devices 12, 13.

The data received are used by the consistency check server 19 to check with information stored in a reference database 25 if the different software applications 15, 16, 17, 18 installed in the data processing devices 12, 13 are capable of interacting together.

Documents with XML format are transferred over the communications network 11 to the consistency check server 19 that has a memory 20 having a consistency checker program. The said program is able to discover each interworking component connected to the network and send queries to those components to ask their configuration profile (store in the consistency data base information) and then check if all the configuration profile are compatible.

The different manufacturer must define the consistency rules of each interworking component. XML description allows defining proprietary syntax that could be exchange between client and server. This ability allows extending the XML syntax easily to any kind component of the network. The consistency rule is store in a memory 21 called reference database in the consistency check server 19.

It has to be understood that the consistency check server 19 has stored data relative to each software application 14, 15, 16, 17, 18 executed by each of the data processing devices 12, 13. Otherwise, said server would not be capable of checking whether an update of a determined software application or a new software application is consistent with the rest of the software applications already installed and that is regularly executed by each of the data processing devices.

The consistency check server 19 runs the consistency checker program in order to generate an output document that states whether the software applications, according to the files stored in the consistency check server 19, comply or not with the relationship defined by the consistency rules.

If the data in a file do not match with data in other files, the data are marked as inconsistent with respect to the consistency rule under consideration.

## Claims

1. **Method for checking the consistency of software applications** executed on a plurality of data processing devices (12, 13) linked to a communication network (11); **characterised in that** the method comprises the steps of:
• generating a descriptor file corresponding to a software application (14), this descriptor file being independent of the manufacturer of the software application,
• storing this descriptor file in the data processing devices (12) where this software application (14) is executed,
• implementing a consistency check client unit (21) in the data processing device (12),
• implementing a consistency check server (19) linked to said network (11),
• sending an interrogation from this consistency check server (19) to the client unit (21) in order to get the descriptor file stored in the data processing device (12), and
• checking the consistency of all the software applications (14, 15, 16, 17, 18), with the help of a reference database (25) stored in this consistency check server (19).

2. **System for checking the consistency of software applications executed on a plurality of data processing devices** linked to a communication network (11); **characterised in that** the system is adapted to generate a descriptor file corresponding to the software application (14), this descriptor file being independent of the manufacturer of the software application; to store this descriptor file in the data processing device (12) where this software application (14) is executed; to implement a consistency check client unit (23) in the data processing device (12); to implement a consistency check server (19) coupled to said network (11); to send an interrogation from this consistency check server (19) to the client unit (21) in order to get the descriptor file stored in the data processing device (12); and to check the consistency of all the software applications (14, 15, 16, 17, 18), with the help of a reference database (25) stored in this consistency check server (19).

3. **Data processing device** coupled to a communication network (11); **characterised in that** the data processing device (12) includes the consistency check client unit (23) adapted to store the descriptor file generated when the software application (14) is executed.

4. **Data processing device** according to claim 3; **characterised in that** the consistency check client unit (23) is adapted to send the descriptor file to the consistency check server (19) when the data processing device (12) receives a request from the consistency check server (19).

5. **Consistency check server** coupled to the network (11); **characterised in that** the consistency check server (19) includes a reference database (25).

6. **Consistency check server** according to claim 5; **characterised in that** the consistency check server (19) is adapted to check the consistency of all the software applications (14, 15, 16, 17, 18) with the help of the reference database (25).
